# EUROPÄISCHE PATENTSCHRIFT

(11) **EP 2 986 477 B1**
(45) Veröffentlichungstag und Bekanntmachung des Hinweises auf die Patenterteilung: **03.05.2017**
(21) Anmeldenummer: 14704566.0
(22) Anmeldetag: 13.02.2014
(51) Int. Cl.: B60T 11/22, B60T 11/26

(54) **MODULARE AUSLAUFSCHUTZEINRICHTUNG**
MODULAR LEAKAGE PROTECTION DEVICE
DISPOSITIF ANTI-FUITES MODULAIRE

(30) Priorität: 19.04.2013 DE 102013006870
(43) Veröffentlichungstag der Anmeldung: 24.02.2016
(73) Patentinhaber: Lucas Automotive GmbH, 56070 Koblenz (DE)
(72) Erfinder: LEMKE, Klaus, 57614 Borod (DE); NOLL, Daniel, 56626 Andernach (DE); SAKALLA, Martin, 56626 Andernach (DE); ZEUNER, Lothar, 57518 Steineroth (DE)
(74) Vertreter: Thum, Bernhard
(86) Internationale Anmeldenummer: PCT/EP2014/052777
(87) Internationale Veröffentlichungsnummer: WO 2014/170044

(56) Entgegenhaltungen:
- EP-A1- 0 049 657
- WO-A1-98/12087
- DE-A1- 3 304 567
- US-A- 5 066 940

## Beschreibung

Die vorliegende Erfindung betrifft eine modulare Auslaufschutzeinrichtung für einen Fluidbehälter einer Fahrzeugbremsanlage.

Aus dem Stand der Technik sind verschiedene Auslaufschutzeinrichtungen bekannt, die jeweils in den Fluidbehälter integriert sind.

Das Dokument WO 03/012331 A1 offenbart beispielsweise einen Hydraulikfluidbehälter für eine hydraulische Fahrzeugbremsanlage. Der Hydraulikfluidbehälter weist zwei angeformte zylindrische Anschlussstutzen auf. In dem Anschlussstutzen des Hydraulikfluidbehälters ist jeweils ein einstückiges Ventilglied angeordnet, das zwischen einer ersten und einer zweiten Stellung verschiebbar ist. Eine Feder spannt das Ventilglied in seine erste Stellung vor. In der ersten Stellung des Ventilglieds wirkt ein an dem Ventilglied vorgesehener Dichtbund mit einem ringförmigen Dichtsitz zusammen, der von einer Innenfläche des Anschlussstutzens des Hydraulikfluidbehälters nach innen ragt, so dass der Anschlussstutzen abgesperrt ist.

Ferner offenbart das Dokument DE 3 912 110 A1 einen Nachfüllbehälter mit Anschlussstutzen. In dem Anschlussstutzen befindet sich ein Rückschlagventil, das aus einem Schließkörper, einem Betätigungselement, einer Feder und einem Dichtsitz besteht, der in den Boden des Nachfüllbehälters integriert ist. Die Feder stützt sich an einer Vorrichtung ab, die aus einer Abstützplatte, die durch Streben am Boden gehalten wird, und diesen Streben besteht.

Das Dokument DE 33 04 567 A1 beschreibt einen Ausgleichsbehälter für Geberzylinder von hydraulischen Betätigungseinrichtungen in Kraftfahrzeugen mit einem Auslaufstutzen in den eine Versteifungshülse eingelegt ist. Hierdurch werden Undichtigkeiten bei erhöhten Temperatureinwirkungen zwischen Ausgleichsbehälter und Geberzylinder vermieden.

Die aus dem vorstehend beschriebenen Stand der Technik bekannten Vorrichtungen sind in dem Fluidbehälter integriert oder als ein fester Bestandteil des Fluidbehälters ausgebildet.

Je nach Fahrzeugtyp bzw. je nach den Anforderungen des Fahrzeugherstellers ist es jedoch nicht immer notwendig oder gewünscht, einen Fluidbehälter mit einer Auslaufschutzvorrichtung zu versehen. Es ist demnach nicht möglich standardisierte Fluidbehälter zu verwenden.

Ferner muss bei Defekten an den im Fluidbehälter integrierten Auslaufschutzeinrichtungen immer der gesamte Fluidbehälter mit der Auslaufschutzeinrichtung ausgetauscht werden.

Ausgehend von diesem Stand der Technik ist es eine Aufgabe der vorliegenden Erfindung, eine modulare Auslaufschutzvorrichtung bereitzustellen, die je nach Anforderung des Fahrzeugherstellers an dem Fluidbehälter anbringbar ist, und mit der ein Fluidbehälter auch nachträglich ausgerüstet werden kann.

Diese Aufgabe wird mit einer modularen Auslaufschutzeinrichtung für einen Fluidbehälter einer Fahrzeugbremsanlage gemäß dem Patentanspruch 1 gelöst.

Weitere Ausführungsformen der Erfindung werden aus den beigefügten abhängigen Ansprüchen ersichtlich.

Die erfindungsgemäße modulare Auslaufschutzeinrichtung für einen Fluidbehälter einer Fahrzeugbremsanlage umfasst ein Gehäuse, über das die modulare Auslaufschutzeinrichtung an einer Fluidabgabeöffnung des Fluidbehälters anbringbar ist, und ein Schaltglied, das zwischen einer Offenstellung, in der ein Fluiddurchgang in dem Gehäuse freigegeben ist, und einer Schließstellung verlagerbar ist, in der der Fluiddurchgang verschlossen ist. Das Schaltglied ist mittels eines Vorspannmittels in die Schließstellung vorgespannt.

Da die erfindungsgemäße modulare Auslaufschutzeinrichtung eine eigene, d.h. von dem Fluidbehälter unabhängige, Baugruppe darstellt, bei der sämtliche für den Auslaufschutz notwendigen Komponenten in dem Gehäuse der modularen Auslaufschutzeinrichtung vorgesehen sind, können standardgemäße Fluidbehälter schnell und einfach mit einer derartigen modularen Auslaufschutzeinrichtung nachgerüstet werden. Zudem ist es aufgrund der Modularität der erfindungsgemäßen Auslaufschutzeinrichtung möglich, diese schnell und einfach austauschen zu können, was beispielsweise dann vorteilhaft ist, wenn ein Defekt an der Auslaufschutzeinrichtung auftritt.

Ein weiterer Vorteil der erfindungsgemäßen modularen Auslaufschutzeinrichtung besteht darin, dass weiterhin standardgemäße Fluidbehälter verwendet werden können, die je nach Bedarf bzw. je nach Anforderungen der Fahrzeughersteller mit einer derartigen modularen Auslaufschutzeinrichtung versehen werden können. Dadurch können ohne Rücksichtnahme auf die Auslaufschutzeinrichtung hohe Stückzahlen von standardgemäßen Fluidbehältern produziert werden, was sich günstig auf die Produktionskosten bzw. die Stückpreise auswirkt. Es müssen also keine auf die Auslaufschutzeinrichtung abgestimmte Fluidbehälter hergestellt werden. Ferner müssen die Fluidbehälter nicht mehr mit komplexen Geometrien, wie Hinterschnitten und dergleichen, versehen werden, wie dies bei den aus dem Stand der Technik bekannten Fluidbehältern mit Auslaufschutzeinrichtungen notwendig ist

Gemäß einer Ausführungsform der Erfindung kann in dem Gehäuse der modularen Auslaufschutzeinrichtung ein Dichtsitz ausgebildet sein, an den sich das Schaltglied in der Schließstellung anlegt, d.h. der Fluiddurchgang ist verschlossen. Im an einem Fluidbehälter angebrachten Zustand wird die modulare Auslaufschutzeinrichtung gemäß der Erfindung die Schließstellung nur dann einnehmen, wenn der Fluidbehälter zusammen mit der modularen Auslaufschutzeinrichtung von der Bremsanlage des Fahrzeugs abgenommen wird, oder der Fluidbehälter bei einem Unfall des Fahrzeugs von der Fahrzeugbremsanlage abgelöst wird. Dadurch wird ein Auslaufen des Bremsfluids aus dem Fluidbehälter in genannten Fällen verhindert.

Das Schaltglied ist gemäß einer Weiterbildung der Erfindung derart ausgebildet, dass es in der Schließstellung und in der Offenstellung zumindest abschnittsweise aus einer Auslassöffnung für das Fluid aus dem Gehäuse vorstehen kann. In der Schließstellung steht das Schaltglied weiter aus dem Gehäuse vor, als in der Offenstellung, d.h. als im betätigten Zustand. Wenn der Fluidbehälter mit der modularen Auslaufschutzeinrichtung an einer Fahrzeugbremsanlage bzw. an einem Hauptbremszylinder angebracht wird, gelangt das Schaltglied mit einem Abschnitt des Hauptbremszylinders in Anlage und wird betätigt, d.h. in die Offenstellung verlagert. Solange der Fluidbehälter an der Fahrzeugbremsanlage angebracht ist, steht das Schaltglied mit einem Abschnitt des Hauptbremszylinders in Kontakt und wird dadurch in der Offenstellung gehalten. Anders ausgedrückt, bildet der aus dem Gehäuse der modularen Auslaufschutzeinrichtung vorstehende Abschnitt des Schaltglieds einen Betätigungsabschnitt, über den die modulare Auslaufschutzeinrichtung aus der Schließstellung in die Offenstellung verlagerbar ist.

In dem Gehäuse der modularen Auslaufschutzeinrichtung kann gemäß einer Weiterbildung der Erfindung wenigstens eine Einlassöffnung für das Fluid ausgebildet sein. In der Offenstellung des Schaltglieds bildet die wenigstens eine Einlassöffnung für das Fluid einen Abschnitt des von dem Schaltglied freigegebenen Fluiddurchgangs, so dass das Fluid aus dem Fluidbehälter über die Auslaufschutzeinrichtung zur Fahrzeugbremsanlage strömen kann.

Das Vorspannmittel kann vorzugsweise mit dem Gehäuse und dem Schaltglied in Verbindung stehen. Das Vorspannmittel kann eine Druckfeder, ein Zugfederelement oder ein Gummielement sein. Ausschlaggebend für die Wahl der Art des Vorspannmittels ist dabei, dass das Vorspannmittel das Schaltglied in seine Schließstellung vorspannen kann.

Gemäß einer Weiterbildung der Erfindung kann das Schaltglied einen Ventilabschnitt aufweisen, der zum Zusammenwirken mit dem gehäuseseitigen Dichtsitz ausgebildet ist. Um sicherzustellen, dass die Auslaufschutzeinrichtung in der Schließstellung des Schaltglieds dicht ist, d.h. kein Auslaufen des Fluids aus dem Fluidbehälter möglich ist, wird die Form des Ventilabschnitts des Schaltglieds auf die Form bzw. die konstruktive Gestalt des Dichtsitzes in dem Gehäuse der modularen Auslaufschutzeinrichtung abgestimmt. Dabei können ferner auch an dem Schaltglied bzw. an dem Dichtsitz weitere Dichtelemente, wie O-Ringe oder dergleichen, vorgesehen sein. Der Ventilabschnitt des Schaltglieds, der mit dem Dichtsitz in Anlage kommt, kann dabei zumindest abschnittsweise kegelförmig oder auch sphärisch ausgebildet sein.

Gemäß einer Weiterbildung der Erfindung kann das Schaltglied einen im Querschnitt sternförmigen oder runden Betätigungsabschnitt aufweisen. Unter dem Betätigungsabschnitt ist dabei der zusammen mit seiner Stirnseite aus dem Gehäuse der Auslaufvorrichtung vorstehende Abschnitt zu verstehen, der von der Fahrzeugbremsanlage betätigt werden kann, wenn der Betätigungsabschnitt mit der Fahrzeugbremsanlage in Angriff gelangt. Anders ausgedrückt, kann über den Betätigungsabschnitt das Schaltglied von der Schließstellung in die Offenstellung verlagert werden. Ist der Betätigungsabschnitt im Querschnitt sternförmig ausgebildet, weist der Betätigungsabschnitt mehrere Stege auf, zwischen denen Freiräume ausgebildet sind, um einen ungehinderten Durchfluss des Fluids von dem Fluidbehälter zur Fahrzeugbremsanlage im geöffneten Zustand der Auslaufschutzeinrichtung zuzulassen. Die Stege des sternförmigen Querschnitts des Schaltglieds dienen ferner als Führung für das Schaltglied in dem Gehäuse der modularen Auslaufschutzeinrichtung. Dazu können sich die Stege beispielsweise zumindest abschnittsweise an das Gehäuse anlegen. Wenn der Betätigungsabschnitt mit einem runden Querschnitt ausgebildet ist, wird zwischen der Außenumfangsfläche des Betätigungsabschnitts und der Innenwandung des Gehäuses ein Freiraum gebildet, der einen ungehinderten Durchfluss des Fluids ermöglicht.

Um das Gehäuse der modularen Auslaufschutzeinrichtung an dem Fluidbehälter anbringen zu können, können an dem Gehäuse der modularen Auslaufschutzeinrichtung Befestigungsmittel zur Befestigung der modularen Auslaufschutzeinrichtung an dem Fluidbehälter ausgebildet sein. Das Gehäuse kann dabei gemäß einer Ausführungsform derart ausgebildet sein, dass es über einen Formschluss an dem Fluidbehälter anbringbar ist. Ferner kann das Gehäuse mit Elementen zur Bildung einer Klick-, Schnapp- oder Rastverbindung versehen sein. Im Fall von Klick-, Schnapp- oder Rastverbindungen ist es einerseits möglich, zueinander korrespondierende Formationen zur Herstellung derartiger Verbindungen an dem Gehäuse und dem Fluidbehälter vorzusehen. Andererseits können auch nur an dem Gehäuse Klick-, Schnapp- bzw. Rastformationen, beispielsweise in Form von Vorsprüngen, vorgesehen sein, die über einen Reibschluss eine feste Verbindung mit dem Fluidbehälter herstellen. Es ist auch denkbar, dass an dem Gehäuse Vorkehrungen zur Ausbildung einer Gewindeverbindung oder eines Bajonettverschlusses zur Befestigung der modularen Auslaufschutzeinrichtung an dem Fluidbehälter vorgesehen sind. Es ist zudem denkbar, die modulare Auslaufschutzeinrichtung über einen Sicherungsring, beispielsweise über einen Sicherungsring aus Gummi, an dem Fluidbehälter zu befestigen.

Gemäß einer Weiterbildung der Erfindung kann das Gehäuse ein abnehmbares Verschlusselement aufweisen. Über dieses Verschlusselement können beispielsweise die weiteren Komponenten der Auslaufschutzeinrichtung wie das Vorspannmittel und das Schaltglied in die modulare Auslaufschutzeinrichtung eingebracht und über das Verschlusselement in dem Gehäuse gesichert werden.

In diesem Zusammenhang kann gemäß einer Weiterbildung der Erfindung vorgesehen sein, dass das Vorspannmittel sich zwischen dem Verschlusselement und dem Schaltglied erstreckt. Dadurch wird gewährleistet, dass das Vorspannmittel das Schaltglied in Richtung der Schließstellung vorspannen kann.

Die vorliegende Erfindung betrifft ferner einen Fluidbehälter für eine Fahrzeugbremsanlage mit einer modularen Auslaufschutzeinrichtung der voranstehend beschriebenen Art. Vorzugsweise kann die modulare Auslaufschutzeinrichtung im Befestigungseingriff mit einer Innenwand eines Auslaufstutzens des Fluidbehälters stehen.

Ferner betrifft die vorliegende Erfindung auch einen Hauptbremszylinder mit einem Fluidbehälter der voranstehend beschriebenen Art.

Gemäß einer Ausführungsform kann der Hauptbremszylinder einen Einlassstutzen zur Aufnahme des Auslaufstutzens des Fluidbehälters aufweisen, wobei der Einlassstutzen des Hauptbremszylinders eine Ausnehmung aufweist, die den Betätigungsabschnitt des Schaltglieds der modularen Auslaufschutzeinrichtung aufnehmen kann.

Im Folgenden werden mit Bezug auf die beigefügten Figuren einige Ausführungsformen der vorliegenden Erfindung beschrieben. Es stellen dar:
- Fig. 1 und 2: Ansichten einer ersten Ausführungsform der modularen Auslaufschutzeinrichtung gemäß der Erfindung;
- Fig. 3 und 4: Ansichten einer zweiten Ausführungsform der modularen Auslaufschutzeinrichtung gemäß der Erfindung;
- Fig. 5 und 6: Ansichten einer dritten Ausführungsform der modularen Auslaufschutzeinrichtung gemäß der Erfindung;
- Fig. 7 und 8: Ansichten einer vierten Ausführungsform der modularen Auslaufschutzeinrichtung gemäß der Erfindung;
- Fig. 9 bis 20: Ansichten von Befestigungsmöglichkeiten der modularen Auslaufschutzeinrichtung an einem Fluidbehälter;
- Fig. 21 und 22: Ansichten der modularen Auslaufschutzeinrichtung gemäß der Erfindung im an einer Bremsanlage angebrachten Zustand; und
- Fig. 23 und 24: Ansichten einer fünften Ausführungsform der modularen Auslaufschutzeinrichtung gemäß der Erfindung im an der Fahrzeugbremsanlage angebrachten Zustand.

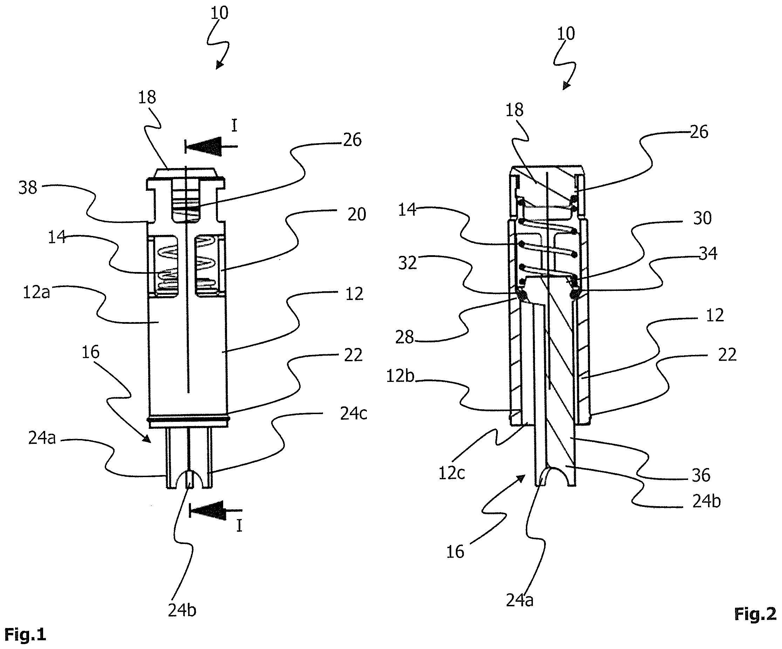

Fig. 1 zeigt eine modulare Auslaufschutzeinrichtung gemäß einer Ausführungsform der Erfindung, die allgemein mit 10 bezeichnet ist.

Die modulare Auslaufschutzeinrichtung 10 umfasst ein Gehäuse 12, in dem ein Vorspannmittel 14 und ein Schaltglied 16 angeordnet sind. Das Gehäuse 12 umfasst ein Verschlusselement 18, an dem sich das Vorspannmittel 14 abstützt. Das Vorspannmittel 14 gemäß dieser Ausführungsform ist eine Druckfeder, die sich zwischen dem Verschlusselement 18 und dem Schaltglied 16 erstreckt. In dem Gehäuse sind ferner Fluideinlassöffnungen 20 vorgesehen, durch die das sich in einem in Fig. 1 nicht gezeigten Fluidbehälter befindliche Fluid in die modulare Auslaufschutzeinrichtung 10 einströmen kann. Gemäß dieser Ausführungsform ist an dem Gehäuse 12 bzw. an dessen Außenwand 12a ein umlaufender Vorsprung 22 ausgebildet, der zur Befestigung der modularen Auslaufschutzeinrichtung 10 bzw. des Gehäuses 12 an einem Fluidbehälter (nicht gezeigt) dienen kann.

Das Schaltglied 16 weist mehrere Stege 24a, 24b, 24c auf, d.h. das Schaltglied 16 ist in diesem Bereich im Querschnitt sternförmig ausgebildet. Durch die Stege 24a, 24b, 24c werden Freiräume zwischen einer Innenwand 12b (siehe Fig.2) des Gehäuses 12 und dem Schaltglied 16 gebildet, die einen Durchfluss des Fluids durch die modulare Auslaufschutzeinrichtung 10 zulassen. Die Stege 24a, 24b, 24c dienen ferner zur Führung des Schaltglieds 16 in dem Gehäuse 12. Die Stege 24a, 24b, 24c können dazu abschnittsweise mit der Innenwand 12a des Gehäuse 12 in Kontakt stehen.

Das Verschlusselement 18 weist ein Außengewinde oder einen Rastvorsprung 26 auf, um an dem Gehäuse 12 angebracht werden zu können.

Fig. 2 zeigt eine Schnittansicht der modularen Auslaufschutzeinrichtung 10 entlang der Schnittlinie I-I in Fig. 1.

In dem Gehäuse 12 ist ein Dichtsitz 28 ausgebildet, an den sich das Schaltglied 16 in seiner Schließstellung anlegt. Dazu weist das Schaltglied 16 einen Ventilabschnitt 30 auf, der mit einer Dichtfläche 32 versehen ist. Um in der Schließstellung einen Fluiddurchfluss zuverlässig zu vermeiden, ist an der Dichtfläche 32 ein Dichtring 34 vorgesehen, beispielsweise ein O-Ring, der sich an den Dichtsitz 28 in dem Gehäuse 12 anlegt.

Das Gehäuse 12 ist gemäß dieser Ausführungsform rohrförmig ausgebildet und wird einenends über das Verschlusselement 18 verschlossen. Über das Ende des Gehäuses 12, an dem das Verschlusselement 18 vorgesehen ist, werden bei der Montage der modularen Auslaufschutzeinrichtung 10 das Schaltglied 16 und das Vorspannmittel 14 in das Gehäuse 12 eingebracht, bevor dieses Ende mit dem Verschlusselement 18 verschlossen wird. Der Ventilkopf 30 des Schaltglieds 16 kann sich somit nur in einem Bereich des Gehäuses 12 zwischen dem Dichtsitz 28 und dem Verschlusselement 18 bewegen. Anders ausgedrückt, legt der genannte Bereich des Gehäuses 12 den möglichen Hub des Ventilabschnitts 30 bzw. des Schaltglieds 16 fest.

Über die Feder 14 ist das Schaltglied 16 in seine Schließstellung vorgespannt, in der sich das Schaltglied 16 mit seinem Ventilabschnitt 30 bzw. mit der Dichtfläche 32 und dem O-Ring 34 an den Dichtsitz 28 anlegt. Wird die modulare Auslaufschutzeinrichtung 10 betätigt, d.h. das Schaltglied 16 in Richtung des Verschlusselements 18 verlagert, wird die Feder 14 komprimiert und das durch die Fluidöffnungen 20 einströmende Fluid kann zwischen dem Ventilabschnitt 30 des Schaltglieds 16 und der Innenwand 12b des Gehäuses 12 durch das Gehäuse 12 bzw. durch die modulare Auslaufschutzeinrichtung 10 strömen. Anders ausgedrückt, bilden die Einströmöffnungen 20 in der Offenstellung des Schaltglieds 16 zusammen mit den Stegen 24a, 24b und 24c sowie der Innenwand 12b des Gehäuses 12 einen Fluiddurchgang, durch den das Fluid aus dem in Fig. 2 nicht gezeigten Fluidbehälter durch die modulare Auslaufschutzeinrichtung 10 strömen kann. Das Fluid strömt dann durch eine Öffnung 12c in dem Gehäuse 12 zur Fahrzeugbremsanlage (nicht gezeigt). Die Öffnung 12c ist an dem dem Verschlusselement 18 entgegengesetzten Ende des Gehäuses 12 vorgesehen.

Aus den Fig. 1 und 2 wird ferner ersichtlich, dass das Schaltglied 16 aus dem Gehäuse 12 bzw. aus der Öffnung 12c des Gehäuses 12 in axialer Richtung der modularen Auslaufschutzeinrichtung 10 vorsteht. Der aus dem Gehäuse 12 vorstehende Abschnitt des Schaltglieds 16 bildet zusammen mit seiner Stirnseite einen Betätigungsabschnitt 36, über den das Schaltglied 16 aus seiner Schließstellung gegen die Federkraft der Feder 14 in die Offenstellung verlagerbar ist. Der Betätigungsabschnitt 36 steht in der Schließstellung des Schaltglieds 16 weiter aus dem Gehäuse 12 vor, als in der Offenstellung des Schaltglieds 16. Die Stirnseite des Betätigungsabschnittes 36 ist mit einer Ausnehmung versehen, um einen gleichmäßigen Fluidstrom gewährleisten zu können.

Das Schaltglied 16 kann drei Stellungen einnehmen. In der bereits beschriebenen Schließstellung liegt das Schaltglied 16 an dem Dichtsitz 28 an (kein Hub). In der Offenstellung des Schaltglieds 16 befindet sich der Ventilabschnitt 30 des Schaltglieds 16 in axialer Richtung in etwa in der Mitte der Einlassöffnungen 20 (halber Hub). Als dritte Stellung ist eine Montagestellung vorgesehen, in der das Schaltglied 16 sich vollständig in dem Gehäuse 12 befindet (ganzer Hub), d.h. der Betätigungsabschnitt 36 des Schaltglieds 16 steht nicht aus dem Gehäuse 16 vor. In der Montagestellung ist die Feder 14 vollständig komprimiert. In Fig. 2 erkennt man ferner erneut den Rastvorsprung 22 an dem Gehäuse 12, der das Gehäuse 12 zu der Fluidabgabeöffnung (nicht gezeigt) des Fluidbehälters hin abdichtet.

Ferner wird aus den Figuren 1 und 2 ersichtlich, dass im Befestigungsbereich des Verschlusselements 18 weitere Öffnungen bzw. Ausnehmungen 38 vorgesehen sind, die ebenfalls ein Einströmen des Fluids ermöglichen und zur Befestigung des Verschlusselements 18 dienen können.

Die folgenden Figuren zeigen weitere Ausführungsformen der modularen Auslaufschutzeinrichtungen. Im Folgenden werden gleichartige oder gleich wirkende Komponenten mit den gleichen Bezugszeichen versehen, jedoch mit einer zusätzlichen Ziffer vorangestellt.

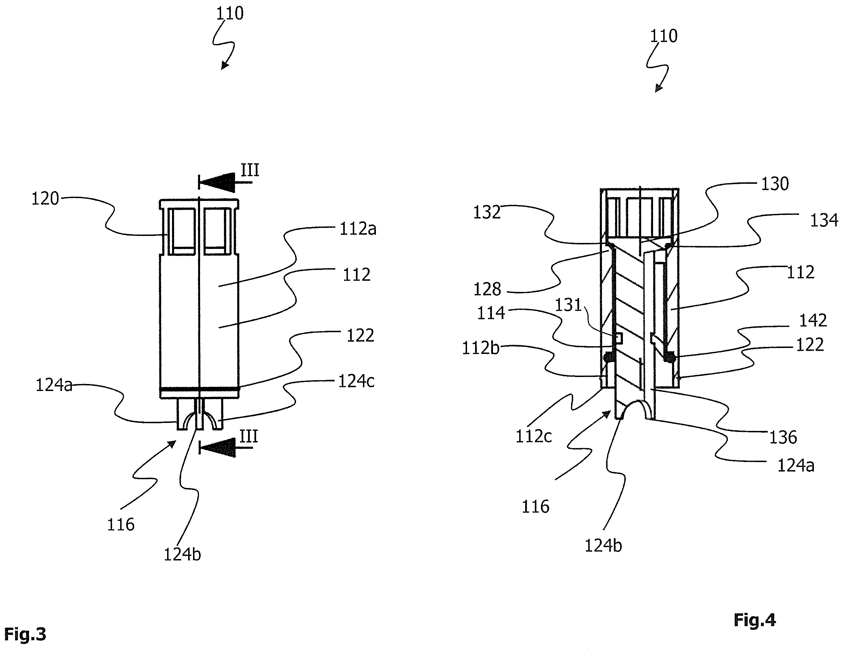

Fig. 3 zeigt eine zweite Ausführungsform einer modularen Auslaufschutzeinrichtung 110.

Die modulare Auslaufschutzeinrichtung 110 umfasst ein Gehäuse 112 mit Fluideinlassöffnungen 120 und einem umlaufenden Rastvorsprung 122. Das aus dem Gehäuse 112 herausragende Schaltglied 116 weist drei Stege 124a, 124b und 124c auf.

Fig. 4 zeigt eine Schnittansicht der modularen Auslaufschutzeinrichtung 110 entlang der Schnittlinie III-III aus Fig. 3.

In dem Gehäuse 112 erkennt man den Dichtsitz 128. Das Schaltglied 116 ist mit einem Ventilabschnitt 130 versehen, an dem eine Dichtfläche 132 ausgebildet ist. Die Dichtfläche 132 kann mit dem Dichtsitz 128 an dem Gehäuse 112 in Anlage gelangen. Das Vorspannmittel 114 gemäß dieser Ausführungsform ist ein Rückholgummielement. Das Vorspannmittel bzw. das Rückholgummielement 114 ist in einem Befestigungsbereich 142 an dem Gehäuse 112 angebracht und erstreckt sich entlang der Innenwandung 112b des Gehäuses 112 zu dem Schaltglied 116 bzw. zu einer Aufnahmenut 131 an dem Schaltglied 116, an dem das Rückholgummielement 114 ebenfalls angebracht ist, um das Schaltglied 116 in seine Schließstellung vorspannen zu können. Das Rückholgummielement 114 ist an der Aufnahmenut 131 befestigt bzw. wird von der Aufnahmenut 131 zumindest abschnittsweise aufgenommen. Die Aufnahmenut 131 ist in jedem der drei Stege 124a, 124b und 124c in deren Randbereich vorgesehen. Das Rückholgummielement 114 kann gemäß dieser Ausführungsform ringförmig ausgebildet sein.

Die Funktionsweise der Ausführungsform gemäß der Fig. 3 und 4 ist der Ausführungsform gemäß der Fig. 1 und 2 sehr ähnlich, da das Schaltglied 116 über den Betätigungsabschnitt 136 entgegen der Vorspannung des Rückholgummielements 114 aus seiner Schließstellung in die Offenstellung verlagert wird, in der ein Fluiddurchgang durch das Gehäuse 112 ausgehend von den Einströmöffnungen 120 zwischen dem Schaltglied 116 und der Innenwand 112b des Gehäuses 112 entlang dem Schaltglied 116 freigegeben wird. Das Fluid tritt dann durch die Öffnung 112c des Gehäuses 112 aus der modularen Auslaufschutzeinrichtung 110 aus.

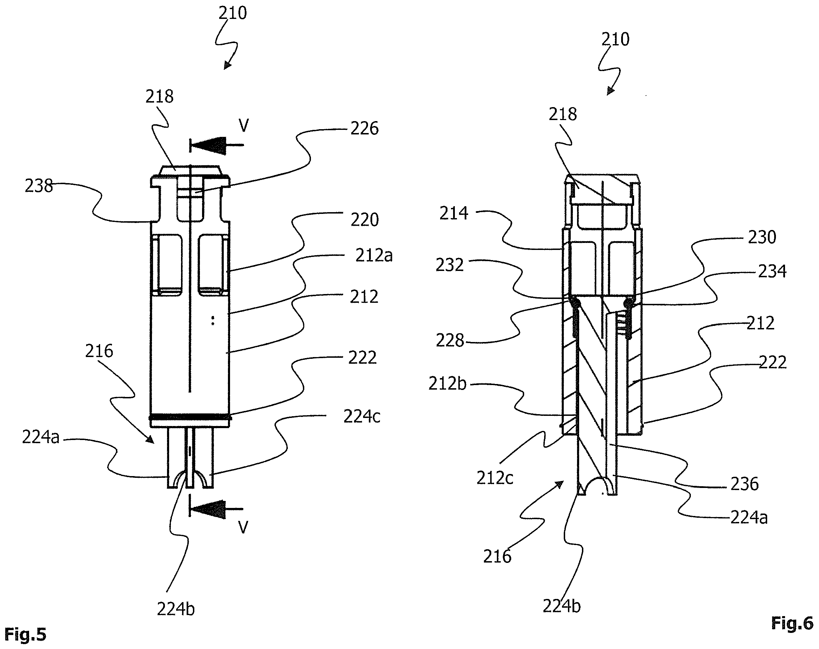

Fig. 5 zeigt eine dritte Ausführungsform der modularen Auslaufschutzeinrichtung 210.

Die modulare Auslaufschutzeinrichtung 210 umfasst das Gehäuse 212 mit den Fluideinströmöffnungen 220 und dem umlaufenden Rastvorsprung 222. Das Gehäuse 212 weist ferner ein Verschlusselement 218 auf. Aus dem Gehäuse 212 ragt der Betätigungsabschnitt 236 des Schaltglieds 216. Das Schaltglied 216 weist wiederum drei Stege 224a, 224b und 224c auf.

Im Bereich des Verschlusselements 218 können ferner weitere Öffnungen 238 in dem Gehäuse 212 ausgebildet sein.

Fig. 6 zeigt eine Schnittansicht entlang der Schnittlinie V-V aus Fig. 5.

Das Vorspannmittel 214 gemäß der dritten Ausführungsform ist eine Zugfeder, die einenends an dem Gehäuse 212 und anderenends an dem Ventilabschnitt 230 des Schaltglieds 216 befestigt ist. Die Zugfeder 214 erstreckt sich entlang eines Abschnitts der Innenwandung 212b des Gehäuses 212 zwischen dem Befestigungspunkt 242 an dem Gehäuse 212 und ihrem Befestigungspunkt an dem Ventilabschnitt 230 des Schaltglieds 216. Das Verschlusselement 218 ist formschlüssig an dem Gehäuse 212 angebracht bzw. weist einen Befestigungsvorsprung 226 auf.

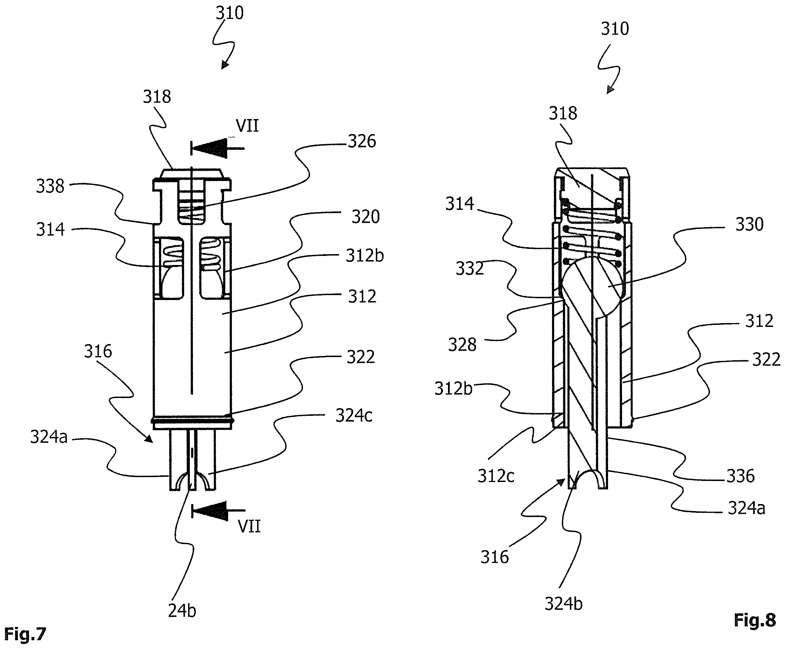

Die Fig. 7 und 8 zeigen eine vierte Ausführungsform der modularen Auslaufschutzeinrichtung gemäß der Erfindung.

Die modulare Auslaufschutzeinrichtung 310 gemäß Fig. 7 umfasst das Gehäuse 312, das Schaltglied 316 sowie das Verschlusselement 318. Zwischen dem Verschlusselement 318 und dem Schaltglied 316 erstreckt sich ein Vorspannmittel 314, das gemäß dieser Ausführungsform wiederum eine Zugfeder ist.

An dem Gehäuse 312 der modularen Schutzeinrichtung 310 sind die Einlassöffnungen 320 sowie der umlaufende Rastvorsprung 322 ausgebildet. Im Bereich des Verschlusselements 318 sind ebenfalls Öffnungen 328 in dem Gehäuse 312 vorgesehen, über die das Fluid ebenfalls einströmen kann.

Fig. 8 zeigt eine Schnittansicht entlang der Schnittlinie VII-VII aus Fig. 7.

In Fig. 8 erkennt man, dass der Ventilabschnitt 330 des Schaltglieds 316 gemäß dieser Ausführungsform sphärisch, also abschnittsweise kugelförmig, ausgebildet ist. Der sphärische Ventilabschnitt 330 weist einen Dichtabschnitt 332 auf, der sich an dem in dem Gehäuse 312 ausgebildeten Dichtsitz 328 anlegt. Der Dichtsitz 328 kann hier konisch oder gekrümmt ausgebildet sein, um mit dem Dichtabschnitt 332 fluiddicht abzuschließen.

Das Betätigungselement 316 umfasst wiederum drei Stege 324a, 324b, 324c und ragt aus dem Gehäuse 312 bzw. aus der Öffnung 312c in dem Gehäuse 312 hinaus.

Wie auch schon bei der ersten Ausführungsform spannt das zwischen dem Verschlusselement 318 und dem Schaltglied 316 angeordnete Vorspannmittel 314, d.h. die Feder, das Schaltglied 316 mit seinem sphärischen Ventilabschnitt 330 in Richtung der Schließstellung des Schaltglieds 316, d.h. in Richtung des Dichtsitzes 328 vor.

Die Funktionsweise der vierten Ausführungsform ist identisch zu der Funktionsweise der ersten Ausführungsform.

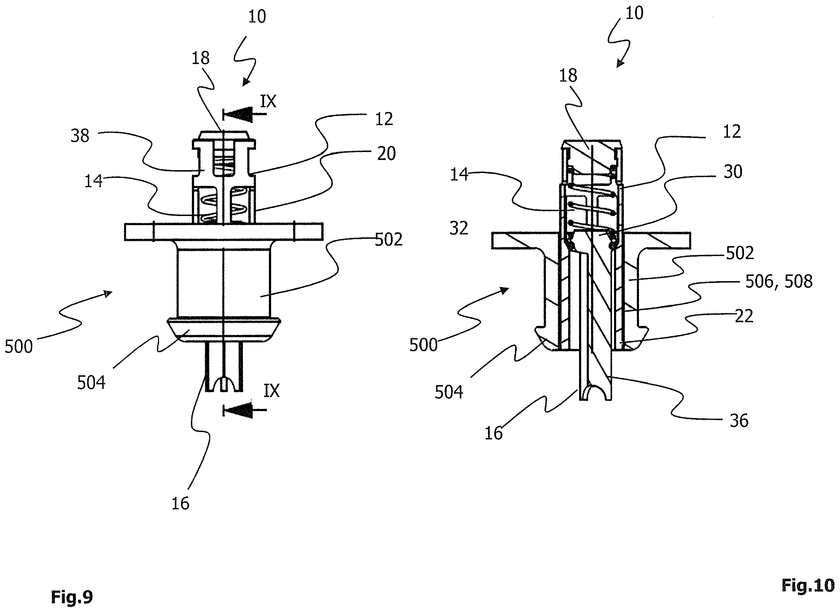

Fig. 9 zeigt eine Vorderansicht der modularen Auslaufschutzeinrichtung 10 gemäß der ersten Ausführungsform in an einem Fluidbehälter 500 angebrachten Zustand.

Der Fluidbehälter 500 ist in Fig. 9 ausschnittsweise dargestellt. Der Fluidbehälter 500 weist einen Auslassstutzen 502 auf, der mit einer Rastnase 504 an seinem distalen Ende versehen ist. Der Auslaufstutzen 502 mit seiner Rastnase 504 gelangt im an einer Fahrzeugbremsanlage angebrachten Zustand mit einem in Fig. 9 nicht gezeigten Hauptbremszylinder in Eingriff.

Aus Fig. 9 wird weiter ersichtlich, dass das Schaltglied 16 bzw. dessen Betätigungsabschnitt 36 auch aus dem Auslassstutzen 502 vorsteht.

Fig. 10 zeigt eine Schnittansicht entlang der Schnittlinie IX-IX aus Fig. 9. Dabei erkennt man nun, wie sich die Außenwandung 12a des Gehäuses 12 an die Innenwand 506 einer Fluidabgabeöffnung 508 in dem Auslaufstutzen 502 anliegt. Der umlaufende Rastvorsprung 22 an dem Gehäuse 12 der modularen Auslaufschutzeinrichtung steht mit dem Auslassstutzen 502 des Fluidbehälters 500 in Eingriff bzw. dichtet gegenüber der Innenwand 506 des Auslassstutzens 502 ab.

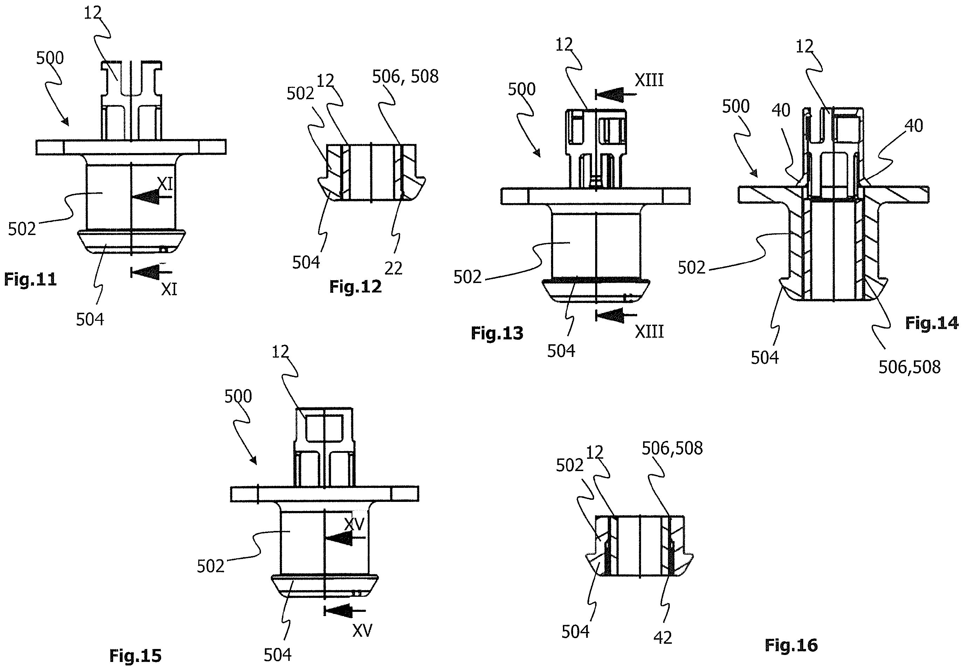

Die Fig. 11 und 12 zeigen ein Ausführungsbeispiel einer Befestigung des Gehäuses 12 an dem Fluidbehälter 500.

Fig. 11 zeigt dabei eine Ansicht, in der lediglich das Gehäuse 12 in dem Fluidbehälter 500 bzw. in dem Auslaufstutzen 502 des Fluidbehälters 500 gezeigt ist.

Fig. 12 zeigt eine Schnittansicht entlang der Schnittlinie XI-XI aus Fig. 11.

Gemäß den Fig. 11 und 12 ist das Gehäuse 12 an dem Auslassstutzen 502 des Fluidbehälters 500 über einen Formschluss ausgebildet, bei dem sich die Außenwandung 12a des Gehäuses 12 an die Innenwandung 506 des Auslassstutzens 502 anlegt und zusammen mit dem umlaufenden Rastvorsprung 22 des Gehäuses 12 einen Formschluss herstellt.

Die Fig. 13 und 14 zeigen ein weiteres Ausführungsbeispiel einer Befestigung des Gehäuses 12 an dem Fluidbehälter.

Gemäß diesem Ausführungsbeispiel ist das Gehäuse 12 über eine Klickverbindung an dem Fluidbehälter 500 angeordnet. Dazu sind an dem Gehäuse 12 Klickelemente bzw. Schnappelemente 40 ausgebildet, die mit dem Fluidbehälter 500 bzw. der Öffnung 508 des Auslassstutzens 502 in Eingriff stehen. Die Klickelemente 40 verspannen dabei das Gehäuse 12 gegen den Fluidbehälter 500 bzw. die Innenwandung 506 des Auslaufstutzens 502. Hier ist es auch denkbar, an dem Gehäuse 12 vorstehende Rastelemente bzw. Rastvorsprünge vorzusehen, die in eine an dem Fluidbehälter 500 vorgesehene Vertiefung einrasten bzw. eingreifen. Es können auch ausschließlich Rastelemente an dem Gehäuse 12 ausgebildet sein, die einen Reibschluss mit dem Fluidbehälter 500 oder der Innenwandung 506 des Auslaufstutzens 502 herstellen.

Die Fig. 15 und 16 zeigen ein weiteres Ausführungsbeispiel einer Befestigung des Gehäuses 12 an dem Fluidbehälter 500 bzw. an dem Auslaufstutzen 502 des Fluidbehälters 500.

Gemäß diesem Ausführungsbeispiel ist an dem Gehäuse 12 ein Außengewinde 42 vorgesehen, das ggf. mit einem an der Innenwandung 506 des Auslaufstutzens 502 vorgesehenen Innengewinde zusammenwirkt. Ferner kann anstelle eines Gewindes ein Bajonettverschluss verwendet werden, um das Gehäuse 12 an dem Fluidbehälter 500 zu befestigen.

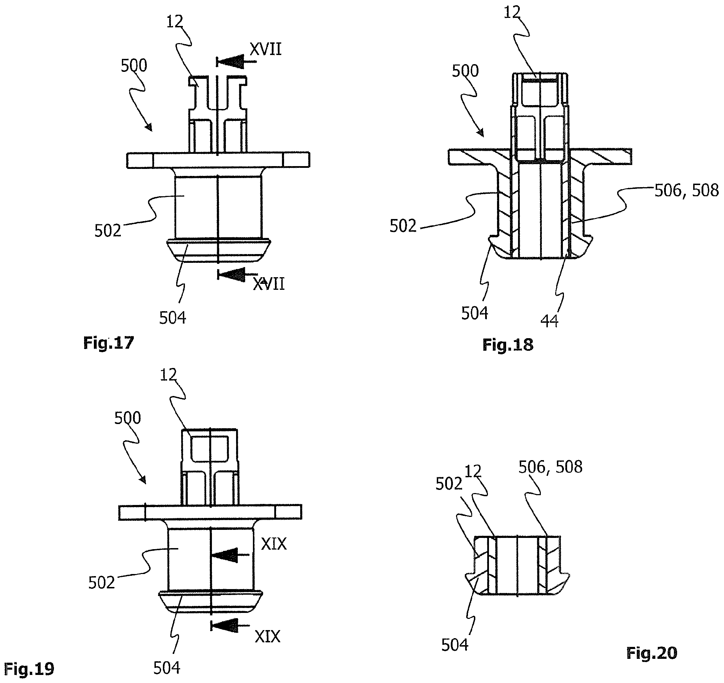

Die Fig. 17 und 18 zeigen ein weiteres Ausführungsbeispiel einer Befestigung des Gehäuses 12 an dem Auslaufstutzen 502 des Fluidbehälters 500.

Dabei ist an dem Gehäuse 12 ein Dichtungselement, beispielsweise ein Dichtungsring aus Gummi, vorgesehen, über den das Gehäuse 12 an der Innenwandung 506 des Auslaufstutzens 502 befestigt ist. Der Gummiring 44 kann dementsprechend mit der Innenwandung 506 des Fluidbehälters 500 in Eingriff gelangen, um das Gehäuse 12 an dem Fluidbehälter 500 anbringen zu können.

Die Fig. 19 und 20 zeigen ein weiteres Beispiel einer Befestigungsmöglichkeit des Gehäuses 12 an dem Auslaufstutzen 502 des Fluidbehälters 500. Dabei ist das Gehäuse 12 entweder an einer geeigneten Stelle mit dem Auslaufstutzen 502 bzw. mit dem Fluidbehälter 500 verschweißt.

Es ist auch möglich, das Gehäuse 12 und/oder den Auslaufstutzen 502 des Fluidbehälters 500 zu erwärmen und in Richtung des Gehäuses 12 oder des Auslaufstutzens 502 zu verbiegen, um einen Befestigungseingriff zwischen dem Gehäuse 12 und dem Auslaufstutzen 502 bzw. dem Fluidbehälter 500 herzustellen.

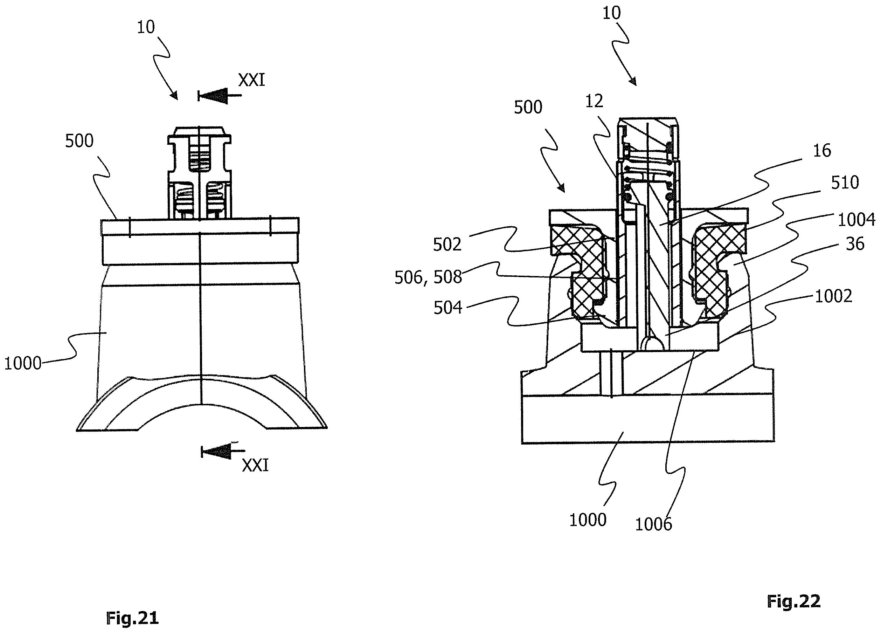

Die Fig. 21 und 22 zeigen eine modulare Auslaufschutzeinrichtung 10 gemäß der ersten Ausführungsform, die zusammen mit dem Fluidbehälter 500 an einem hier abschnittsweise dargestellten Hauptbremszylinder 1000 einer Fahrzeugbremsanlage angebracht ist.

Fig. 22 zeigt eine Schnittansicht entlang der Schnittlinie XXI-XXI aus Fig. 21.

In Fig. 22 erkennt man wiederum die modulare Auslaufschutzeinrichtung 10, die über ihr Gehäuse 12 an dem Auslaufstutzen 502 des Fluidbehälters 500 befestigt ist. Eine Dichtmanschette 510 ist zwischen dem Hauptbremszylinder 1000 und dem Fluidbehälter 500 vorgesehen. Die Rastnase 504 des Auslaufstutzens 502 steht mit der Manschette 510 in Eingriff. Die Manschette 510 wiederum wird über eine Rastnase 1004 des Hauptbremszylinders 1000 an dem Einlassstutzen 1002 gehalten. Die modulare Auslaufschutzeinrichtung 10 befindet sich gemäß Fig. 22 in ihrer Offenstellung, d.h. ein Fluiddurchgang durch die modulare Auslaufschutzeinrichtung 10 bzw. durch das Gehäuse 12 ist über das Schaltglied 16 freigegeben. Zum Vergleich zwischen Offenstellung und Schließstellung des Schaltglieds 16 kann auf die Fig. 1 und 2 verwiesen, die das Schaltglied 16 in der Schließstellung zeigen.

Das Schaltglied 16 bzw. dessen Betätigungsabschnitt 36 steht mit seiner Stirnseite an einer Fläche 1006 des Hauptbremszylinders 1000 an. Bei der Anbringung des Fluidbehälters 500 mit der modularen Auslaufschutzeinrichtung 10 an dem Hauptbremszylinder 1000 wird das Schaltglied 16 bzw. seine Stirnseite über die Fläche 1006 entgegen der Vorspannkraft der Feder 14 in seine Offenstellung verlagert, um einen Fluiddurchfluss zuzulassen.

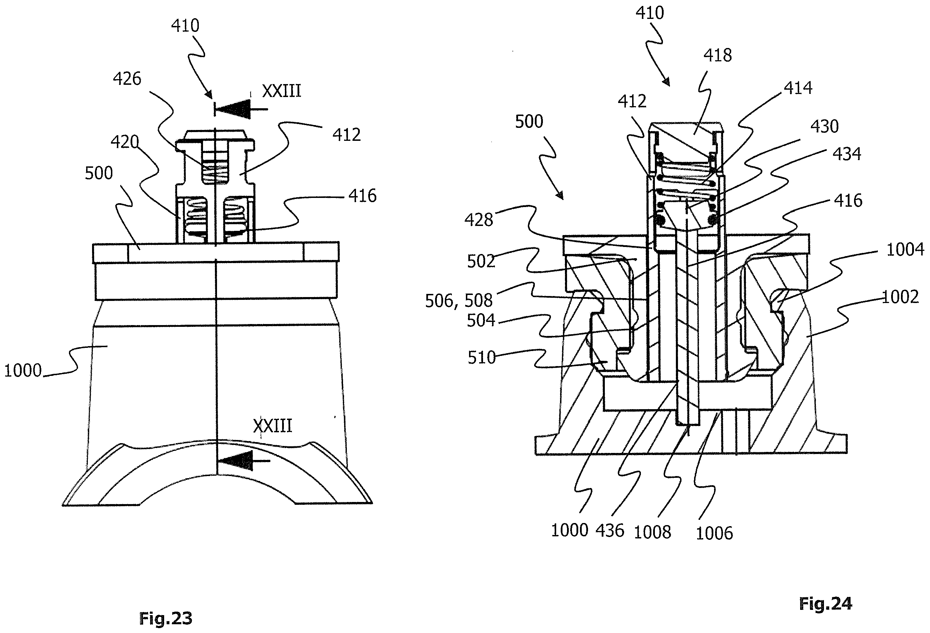

Die Fig. 23 und 24 zeigen eine fünfte Ausführungsform der modularen Auslaufschutzeinrichtung 410 in einem zusammen mit dem Fluidbehälter 500 an dem Hauptbremszylinder 1000 angebrachten Zustand. Die fünfte Ausführungsform entspricht bis auch ein andersartig ausgebildetes Schaltglied 416 vom Aufbau und von der Funktionsweise her dem Aufbau der ersten Ausführungsform.

Fig. 24 zeigt eine Schnittansicht entlang der Schnittlinie XXIII-XXIII aus Fig. 23.

Die modulare Auslaufschutzeinrichtung 410 gemäß dieser Ausführungsform umfasst wiederum ein Schaltglied 416 mit einem Ventilabschnitt 430, der eine Dichtfläche 432 mit einem Dichtring 434 aufweist. Zwischen dem Ventilabschnitt 430 und einem Verschlusselement 418 ist das in Form einer Druckfeder ausgebildete Vorspannmittel 414 vorgesehen. Der Ventilabschnitt 430 mit dem Dichtring 434 wirkt auch gemäß dieser Ausführungsform mit einer an dem Gehäuse 412 ausgebildeten Dichtsitz 428 zusammen.

Der Betätigungsabschnitt 436 des Schaltglieds 416 gemäß dieser Ausführungsform ist zylindrisch, im Querschnitt vorzugsweise mit runder Kontur, beispielsweise oval oder kreisförmig, ausgebildet. Der Betätigungsabschnitt 436 steht aus dem Gehäuse 412 in Richtung der Wandung 1006 des Hauptbremszylinders 1000 vor. In der Wandung 1006 des Einlassstutzens 1002 des Hauptbremszylinders 1000 ist eine Ausnehmung 1008 vorgesehen, die korrespondierend zu der Querschnittsform des Betätigungsglieds 516 ausgebildet ist. Der Betätigungsabschnitt 436 des Schaltglieds 416 wird abschnittsweise in der Ausnehmung 1008 in der Wandung 1006 aufgenommen. Die Ausnehmung 1008 dient zur Führung des Schaltglieds 416.

Das Schaltglied 416 befindet sich gemäß Fig. 24 in seiner Offenstellung, so dass ein Fluiddurchgang freigegeben wird. Die Betätigung des Schaltglieds 416 erfolgt an sich auf die gleiche Weise wie im Zusammenhang mit den Fig. 21 und 22 beschrieben.

Die modulare Auslaufschutzeinrichtung 410 wird zusammen mit dem Fluidbehälter 500 an dem Hauptbremszylinder 1000 angebracht. Während des Anbringens wird das Schaltglied 416 bzw. dessen Betätigungsabschnitt 436 in der Ausnehmung 1008 aufgenommen und entgegen der Vorspannkraft der Feder 414 in seine Offenstellung bewegt, so dass ein Fluiddurchgang von dem Ventilabschnitt 430 des Schaltglieds 416 freigeben wird.

## Patentansprüche

1. Modulare Auslaufschutzeinrichtung (10) für einen Fluidbehälter (500) einer Fahrzeugbremsanlage, mit
- einem Gehäuse (12), über das die modulare Auslaufschutzeinrichtung (10) an einer Fluidabgabeöffnung (508) des Fluidbehälters (500) anbringbar ist, **gekennzeichnet durch** ein Schaltglied (16), das zwischen einer Offenstellung, in der ein Fluiddurchgang in dem Gehäuse (12) freigegeben ist, und einer Schließstellung verlagerbar ist, in der der Fluiddurchgang verschlossen ist, wobei das Schaltglied (16) mittels wenigstens eines Vorspannmittels (14) in die Schließstellung vorgespannt ist.

2. Modulare Auslaufschutzeinrichtung (10) nach Anspruch 1,
**dadurch gekennzeichnet, dass** in dem Gehäuse (12) ein Dichtsitz (28) ausgebildet ist, an den sich das Schaltglied (16) in der Schließstellung anlegt.

3. Modulare Auslaufschutzeinrichtung (10) nach Anspruch 1 oder 2,
**dadurch gekennzeichnet, dass** das Schaltglied (16) in der Schließstellung und in der Offenstellung zumindest abschnittsweise aus einer Auslassöffnung (12c) für das Fluid aus dem Gehäuse (12) vorsteht.

4. Modulare Auslaufschutzeinrichtung (10) nach einem der Ansprüche 1 bis 3, **dadurch gekennzeichnet, dass** das Gehäuse (12) wenigstens eine Einlassöffnung (20) für das Fluid aufweist.

5. Modulare Auslaufschutzeinrichtung (10) nach einem der Ansprüche 1 bis 4, **dadurch gekennzeichnet, dass** das Vorspannmittel (14) mit dem Gehäuse (12) und dem Schaltglied (16) in Verbindung steht.

6. Modulare Auslaufschutzeinrichtung (10) nach einem der Ansprüche 1 bis 5, **dadurch gekennzeichnet, dass** das Schaltglied (16) einen Ventilabschnitt (30) aufweist, der zum Zusammenwirken mit dem gehäuseseitigen Dichtsitz (28) ausgebildet ist.

7. Modulare Auslaufschutzeinrichtung (10) nach einem der Ansprüche 1 bis 6, **dadurch gekennzeichnet, dass** das Schaltglied (16) einen im Querschnitt sternförmigen oder runden Betätigungsabschnitt (36) aufweist.

8. Modulare Auslaufschutzeinrichtung (10) nach einem der Ansprüche 1 bis 7, **dadurch gekennzeichnet, dass** an dem Gehäuse (12) Befestigungsmittel zur Befestigung der modularen Auslaufschutzeinrichtung (10) an dem Fluidbehälter (500) ausgebildet sind.

9. Modulare Auslaufschutzeinrichtung (10) nach einem der Ansprüche 1 bis 8, **dadurch gekennzeichnet, dass** das Gehäuse (12) derart ausgebildet ist, dass es über einen Formschluss an dem Fluidbehälter (500) anbringbar ist

10. Modulare Auslaufschutzeinrichtung (10) nach einem der Ansprüche 1 bis 9, **dadurch gekennzeichnet, dass** das Gehäuse (12) ein abnehmbares Verschlusselement (18) aufweist.

11. Modulare Auslaufschutzeinrichtung (10) nach Anspruch 10,
**dadurch gekennzeichnet, dass** das Vorspannmittel (14) sich zwischen dem Verschlusselement (18) und dem Schaltglied (16) erstreckt.

12. Modulare Auslaufschutzeinrichtung (10) nach einem der Ansprüche 1 bis 11, **dadurch gekennzeichnet, dass** an der Außenwand (12a) des Gehäuses (12) ein umlaufende Rastvorsprung (22) vorgesehen ist.

13. Fluidbehälter (500) für eine Fahrzeugbremsanlage, wobei der Fluidbehälter (500)
eine modulare Auslaufschutzeinrichtung (10) nach einem der Ansprüche 1 bis 12 aufweist.

14. Fluidbehälter (500) nach Anspruch 13,
**dadurch gekennzeichnet, dass** die Außenwand (12a) des Gehäuses (12) der modulare Auslaufeinrichtung (10) mit einer Innenwand (506) einer Fluidabgabeöffnung (508) eines Auslaufstutzens (502) in Befestigungseingriff steht.

15. Hauptbremszylinder (1000) mit einem Fluidbehälter (500) nach Anspruch 13 oder 14.

16. Hauptbremszylinder nach Anspruch 15,
mit einem Einlassstutzen (1002) zur Aufnahme des Auslaufstutzens (502) des Fluidbehälters, wobei der Einlassstutzen (1002) des Hauptbremszylinders (1000) eine Ausnehmung (1008) aufweist, die den Betätigungsabschnitt (36) des Schaltglieds (16) der modularen Auslaufschutzeinrichtung (10) aufnimmt.

## Claims

1. Modular leak prevention device (10) for a fluid container (500) of a vehicle brake system, comprising
- a housing (12), by means of which the modular leak prevention device (10) can be attached to a fluid discharge opening (508) of the fluid container (500), and
- a switching element (16), which is movable between an open position, in which a fluid passage in the housing (12) is released, and a closed position, in which a fluid passage is closed, wherein the switching element (16) is preloaded into the closed position by means of at least one preloading means (14).

2. Modular leak prevention device (10) according to claim 1,
**characterized in that** in the housing (12) a sealing seat (28) is formed, against which the switching element (16) lies in the closed position.

3. Modular leak prevention device (10) according to claim 1 or 2,
**characterized in that** the switching element (16) in the closed position and in the open position projects at least in sections from an outlet opening (12c) for the fluid out of the housing (12).

4. Modular leak prevention device (10) according to any one of claims 1 to 3, **characterized in that** the housing (12) comprises at least one inlet opening (20) for the fluid.

5. Modular leak prevention device (10) according to any one of claims 1 to 4, **characterized in that** the preloading means (14) communicates with the housing (12) and the switching element (16).

6. Modular leak prevention device (10) according to any one of claims 1 to 5, **characterized in that** the switching element (16) comprises a valve portion (30) that is designed to interact with the housing-side sealing seat (28).

7. Modular leak prevention device (10) according to any one of claims 1 to 6, **characterized in that** the switching element (16) comprises an actuating portion (36) that is star-shaped or round in cross section.

8. Modular leak prevention device (10) according to any one of claims 1 to 7, **characterized in that** fastening means for fastening the modular leak prevention device (10) to the fluid container (500) are formed on the housing (12).

9. Modular leak prevention device (10) according to any one of claims 1 to 8, **characterized in that** the housing (12) is designed in such a way that it is attachable by a positive connection to the fluid container (500).

10. Modular leak prevention device (10) according to any one of claims 1 to 9, **characterized in that** the housing (12) comprises a removable closure element (18).

11. Modular leak prevention device (10) according to claim 10,
**characterized in that** the preloading means (14) extends between the closure element (18) and the switching element (16).

12. Modular leak prevention device (10) according to any one of claims 1 to 11, **characterized in that** on the outer wall (12a) of the housing (12) a circumferential detent projection (22) is provided.

13. Fluid container (500) for a vehicle brake system, wherein the fluid container (500) comprises
a modular leak prevention device (10) according to any one of claims 1 to 12.

14. Fluid container (500) according to claim 13,
**characterized in that** the outer wall (12a) of the housing (12) of the modular leak prevention device (10) is in fastening engagement with an inner wall (506) of a fluid discharge opening (508) of a discharge neck (502).

15. Master brake cylinder (1000) having a fluid container (500) according to claim 13 or 14.

16. Master brake cylinder (1000) according to claim 15,
comprising an inlet neck (1002) for receiving the discharge neck (502) of the fluid container (500), wherein the inlet neck (1002) of the master brake cylinder (1000) has a recess (1008) that receives the actuating portion (36) of the switching element (16) of the modular leak prevention device (10).

## Revendications

1. Dispositif anti-fuites modulaire (10) destiné à un réservoir de fluide (500) d'un système de freinage de véhicule, comprenant
- un boîtier (12) par le biais duquel le dispositif anti-fuites modulaire (10) peut être rattaché à un orifice de distribution de fluide (508) du réservoir de fluide (500), **caractérisé par** un organe de commutation (16) pouvant être déplacé entre une position ouverte qui libère un passage de fluide dans le boîtier (12) et une position fermée qui obture ledit passage de fluide, l'organe de commutation (16) étant précontraint dans la position fermée par au moins un moyen de précontrainte (14).

2. Dispositif anti-fuites modulaire (10) selon la revendication 1,
**caractérisé en ce qu'**est ménagé dans le boîtier (12) un siège étanche contre lequel l'organe de commutation (16) vient prendre appui en position fermée.

3. Dispositif anti-fuites modulaire (10) selon la revendication 1 ou 2,
**caractérisé en ce qu'**en position fermée et en position ouverte, l'organe de commutation (16) fait saillie au moins partiellement d'un orifice de sortie (12c) de fluide et du boîtier (12).

4. Dispositif anti-fuites modulaire (10) selon l'une des revendications 1 à 3, **caractérisé en ce que** le boîtier (12) présente au moins un orifice d'admission (20) de fluide.

5. Dispositif anti-fuites modulaire (10) selon l'une des revendications 1 à 4, **caractérisé en ce que** l'élément de précontrainte (14) est relié au boîtier (12) et à l'organe de commutation (16).

6. Dispositif anti-fuites modulaire (10) selon l'une des revendications 1 à 5, **caractérisé en ce que** l'organe de commutation (16) présente une partie formant soupape (30) réalisée pour coopérer avec le siège étanche (28) côté boîtier.

7. Dispositif anti-fuites modulaire (10) selon l'une des revendications 1 à 6, **caractérisé en ce que** l'organe de commutation (16) présente un segment d'actionnement (36) de section ronde ou en forme d'étoile.

8. Dispositif anti-fuites modulaire (10) selon l'une des revendications 1 à 7, **caractérisé en ce que** des moyens de fixation servant à fixer le dispositif anti-fuites modulaire (10) au réservoir de fluide (500) sont ménagés sur le boîtier (12).

9. Dispositif anti-fuites modulaire (10) selon l'une des revendications 1 à 8, **caractérisé en ce que** le boîtier (12) est conçu de manière à pouvoir être rattaché par complémentarité de forme au réservoir de fluide (500).

10. Dispositif anti-fuites modulaire (10) selon l'une des revendications 1 à 9, **caractérisé en ce que** le boîtier (12) présente un élément de fermeture (18) détachable.

11. Dispositif anti-fuites modulaire (10) selon la revendication 10,
**caractérisé en ce que** l'élément de précontrainte (14) s'étend entre l'élément de fermeture (18) et l'organe de commutation (16).

12. Dispositif anti-fuites modulaire (10) selon l'une des revendications 1 à 11, **caractérisé en ce qu'**une saillie d'arrêt par enclenchement (22) est prévue tout autour de la paroi extérieure (12a) du boîtier (12).

13. Réservoir de fluide (500) destiné à un système de freinage de véhicule, ce réservoir de fluide (500) présentant un dispositif anti-fuites modulaire (10) selon l'une des revendications 1 à 12.

14. Réservoir de fluide (500) selon la revendication 13,
**caractérisé en ce que** la paroi extérieure (12a) du boîtier (12) du dispositif anti-fuites modulaire (10) se trouve en prise de serrage avec une paroi intérieure (506) d'un orifice de distribution de fluide (508) d'une tubulure de sortie (502).

15. Maître-cylindre de frein (1000) comportant un réservoir de fluide (500) selon la revendication 13 ou 14.

16. Maître-cylindre de frein selon la revendication 15,
comportant une tubulure d'entrée (1002) servant à recevoir la tubulure de sortie (502) du réservoir de fluide, la tubulure d'entrée (1002) du maître-cylindre de frein (1000) présentant un évidement (1008) destiné à recevoir le segment d'actionnement (36) de l'organe de commutation (16) du dispositif anti-fuites modulaire (10).
